# EUROPÄISCHE PATENTSCHRIFT

(11) **EP 3 254 544 B1**
(45) Veröffentlichungstag und Bekanntmachung des Hinweises auf die Patenterteilung: **03.03.2021**
(21) Anmeldenummer: 17172513.8
(22) Anmeldetag: 23.05.2017
(51) Int. Cl.: A01B 23/02, A01B 35/22, A01B 61/04

(54) **BODENBEARBEITUNGSGERÄT**
SOIL CULTIVATION DEVICE
APPAREIL DE TRAVAIL DU SOL

(30) Priorität: 06.06.2016 DE 102016110396
(43) Veröffentlichungstag der Anmeldung: 13.12.2017
(73) Patentinhaber: Industriehof Scherenbostel Heinrich Rodenbostel GmbH, 30900 Wedemark (DE)
(72) Erfinder: Fritz, Brockmöller, 29683 Bad Fallingbostel (DE)
(74) Vertreter: Gramm, Lins & Partner Patent- und Rechtsanwälte PartGmbB

(56) Entgegenhaltungen:
- EP-A1- 2 445 329
- EP-A1- 2 591 650
- EP-B1- 1 723 840
- WO-A1-2013/176553
- DE-A1-102013 102 420
- DE-T2- 60 118 708
- FI-A- 18 463
- US-A- 1 443 835
- US-A- 3 061 021
- US-A- 3 312 004
- US-A- 3 563 318
- US-A- 5 209 054
- US-A1- 2004 256 121

## Beschreibung

Die Erfindung betrifft ein Bodenbearbeitungsgerät für landwirtschaftliche Maschinen mit einem Träger, der ein oberes Ende und ein unteres Ende aufweist, wobei an dem unteren Ende eine auswechselbare Scharspitze aufgesteckt ist, die über zumindest ein Formschlusselement gegen eine Verlagerung entgegen einer Aufsteckrichtung gesichert ist. Das Bodenbearbeitungsgerät ist insbesondere als Pflugschar, Grubber oder Zinken einer Egge ausgebildet.

Bodenbearbeitungsgeräte, wie Pflugschare, Grubber oder Zinken müssen aus einem Werkstoff ausgebildet sein, der ausreichend zäh ist, um bei stoßartigen Belastungen nicht zu brechen. Darüber hinaus muss eine ausreichende Härte vorhanden sein, um dem abrasiven Verschleiß zu widerstehen. Um diesen beiden Anforderungen gerecht zu werden, ist es aus dem Stand der Technik bekannt, an einem Träger Schneiden oder Scharspitzen aus einem von dem Trägermaterial abweichenden, härteren Werkstoff anzuordnen.

Die EP 2 445 329 B1 betrifft ein Bodenbearbeitungswerkzeug für eine landwirtschaftliche Maschine mit einem Träger, der eine Vorderseite, eine Rückseite und einen Ansatz aufweist, der das freie Ende des Trägers bildet, wobei der Träger einen Schneidenbereich aufweist, in dem ein oder mehrere Hartstoffelemente angeordnet sind. Das Hartstoffelement kann als Schneidelement ausgebildet sein, das zumindest Teil einer Schneidkante bildet und ein Befestigungsstück aufweist. Das Schneidelement ist aufgelötet.

Die DE 10 2013 102 420 A1 betrifft eine Scharspitze für eine landwirtschaftliche Bodenbearbeitungsmaschine mit einem Basisteil, das eine Schneide aufweist, wobei das Basisteil eine Schraubaufnahme an einem Schneidenträger zur Befestigung an einem Träger der landwirtschaftlichen Bodenbearbeitungsmaschine aufweist. Das Basisteil weist eine Aufnahme auf, die in Werkzeugvorschubrichtung mittels eines Deckabschnitts überdeckt ist. Die Scharspitze wird über eine Schraube an einem Zinken befestigt.

Die DE 601 18 708 T3 betrifft ein austauschbares Verschleißteil, das durch Reibungseingriff zwischen einer Führungsanordnung und dem Verschleißteil an einem Arbeitswerkzeug gehalten wird. Die Führungsanordnung ist durch Wände oder Flächen definiert, die eine passende V-Form im Querschnitt aufweisen, um einer relativen Drehung des Verschleißteils um seine Längsachse entgegenzutreten. Das Verschleißteil ist kraftschlüssig an dem Arbeitswerkzeug gehalten und ist gegen ein Verschieben aus der Arbeitsposition gesichert und benötigt keine Gewindebefestigung oder andere gesondert entfernbare Befestigungseinrichtungen.

Die EP 1 723 840 B1 betrifft einen Grubberzinken mit einem Grubberstiel, der mit einer lösbar befestigten Flügelschar versehen ist, wobei der Grubberstiel und die Flügelschar mit einander zugeordneten Kupplungselementen ausgebildet sind. An dem Grubberstiel ist ein federbelastetes Stellelement vorgesehen, über das die Flügelschar in ihrer gekuppelten Stellung verrastbar ist.

Die EP 2 591 650 A1betrifft einen Grubberzinken mit einem Stiel und einem daran angeordneten Scharträger, an dem eine Scharspitze lösbar befestigt ist. Der Scharträger weist in seinem die Scharspitze haltenden Bereich eine nach unten weisende U-Form mit zwei nach unten weisenden Schenkelplatten und einer dazwischen verlaufenden Auflageplatte auf, auf der die Scharspitzenplatte der Scharspitze aufliegt. Die Auflageplatte des Scharträgers durchdringen Befestigungsmittel, die einen an der Unterseite der Scharspitzenplatte angeordneten Vorsprung umfassen. In dem Vorsprung ist ein Schlitz ausgebildet, der eine Federzunge bildet, die mit einer Rastmulde versehen ist. Die Rastmulde wirkt mit einem zwischen den beiden Schenkelplatten verlaufenden Bolzen zusammen.

Die US 5 209 054 A betrifft eine auswechselbare Schneidspitze für eine Mäheinrichtung. Die Schneidspitze ist auswechselbar an einem Träger gelagert und über ein Formschlusselement, das federnd in Richtung einer Sicherungsposition belastet ist, an dem Träger gesichert.

Die US 2004/256 121 A1, die US 3 061 021 A und die US 3 312 004 A betreffen Bodenbearbeitungsgeräte mit einem Träger und einer auswechselbaren Scharspitze, die über ein Formschlusselement gegen ein Abfallen von dem Träger gesichert ist. Das jeweilige Formschlusselement ist federnd in Richtung auf eine Sicherungsposition gelagert.

Die US 3 563 318 A betrifft ein Bodenbearbeitungswerkzeug mit einem Träger, an dem ein Halter für eine Federzunge angeschraubt ist. Die Federzunge wird über einen Bolzen und eine Mutter an dem Träger befestigt und verriegelt eine Scharspitze, die auf den Träger aufgeschoben wird.

Die FI 18463 A zeigt eine Pflugschar mit einer aufsteckbaren Spitze, die einen Verriegelungsbolzen aufweist, an dessen hinteren Ende eine Nut ausgebildet ist, in die eine schwenkbarer, federbelasteter Verriegelungshebel, der an der Pflugschar gelagert ist, einrastet.

Die WO 2013/176553 A1 eine Pflugschar mit einer auswechselbar daran gelagerten Verschleißspitze. Die Verschleißspitze ist an der Pflugschar über Schrauben befestigt.

Die US 1 443 835 A betrifft eine Pflugschar mit einem Träger und einer auswechselbaren Verschleißspitze, die an dem Träger über ein Zwischenstück angeschraubt ist.

Aufgabe der vorliegenden Erfindung ist es, ein Bodenbearbeitungsgerät bereitzustellen, das bei einer vereinfachten werkzeuglosen Montage oder Demontage eine verbesserte Sicherung der Scharspitze an dem Träger gewährleistet.

Erfindungsgemäß wird diese Aufgabe durch ein Bodenbearbeitungsgerät mit den Merkmalen des Hauptanspruches gelöst. Vorteilhafte Ausgestaltungen und Weiterbildungen der Erfindung sind in den Unteransprüchen, der Beschreibung sowie den Figuren näher erläutert.

Das erfindungsgemäße Bodenbearbeitungsgerät für landwirtschaftliche Maschinen mit einem Träger, der ein oberes Ende und ein unteres Ende aufweist, an dem eine auswechselbare Scharspitze aufgesteckt und über ein Formschlusselement gegen eine Verlagerung entgegen einer Aufsteckrichtung gesichert ist, sieht vor, dass das Formschlusselement federnd in Richtung einer Sicherungsposition ausgebildet ist. Durch das Aufstecken der Scharspitze auf den Träger ist es möglich, eine erste Festlegung der Scharspitze an dem Träger bereitzustellen, so dass eine ausreichende Sicherung der Scharspitze an dem Träger gegen eine ungewollte Verlagerung bereitgestellt wird. Die Steckverbindung ist dabei so ausgebildet, dass sie zweckmäßigerweise eine Aufsteckrichtung aufweist, die in Arbeitsrichtung des Bodenbearbeitungsgerätes orientiert ist oder zumindest senkrecht dazu, so dass während der bestimmungsgemäßen Nutzung des Bodenbearbeitungsgerätes die Scharspitze in Aufsteckrichtung auf den Träger belastet wird. Um ein Entfernen der Scharspitze aus der Aufsteckverbindung entgegen der Aufsteckrichtung zu verhindern, ist erfindungsgemäß eine Formschlusssicherung in Gestalt eines Formschlusselementes vorgesehen, das federnd in Richtung auf eine Sicherungsposition ausgebildet ist, so dass eine werkzeuglose Montage durch einfaches Aufstecken der Scharspitze auf den Träger bis zum Einrasten des federnd ausgebildeten Formschlusselementes erreicht wird. Ein Trennen entgegen der Aufsteckrichtung ist ebenfalls werkzeuglos möglich, indem eine impulsartige Kraft auf die Scharspitze entgegen der Aufsteckrichtung aufgebracht wird, so dass das Formschlusselement aus der Sicherungsposition in eine Freigabeposition verlagert wird und dadurch die Sicherung aufgehoben wird. Um eine hierzu notwendige Kraftkomponente entgegen der Federrichtung in die Sicherungsposition aufzubringen, kann eine geneigte Anschlagfläche oder Hinterschnitt an dem Träger oder der Scharspitze angeordnet oder ausgebildet sein, die oder der bei Aufbringen eines ausreichend großen Impulses entgegen der Aufsteckrichtung eine ausreichend große Kraftkomponente zum Zurückbewegen des Formschlusselementes erzeugt. Das Formschlusselement ist an dem Träger als eine aus dem Träger herausgebogene und aus dem Träger herausgebildete Federzunge ausgebildet. Da der Träger in der Regel aus einem weniger harten und damit in der Regel weniger spröden Material besteht, wird das Formschlusselement aus dem Träger herausgebogen, nachdem eine entsprechende Federkontur aus dem Grundmaterial des Trägers eingearbeitet, herausgeschnitten oder auf andere Art und Weise herausgebildet wurde. Die Federeigenschaften können über eine Materialbehandlung, beispielsweise gesonderte Härtung, erzielt werden. Der Träger kann als Leitblech, Schar oder Zinken ausgebildet sein und seinerseits zumindest einen Befestigungsabschnitt aufweisen, so dass der Träger entweder an einem Rahmen oder an einer weiteren Komponente der landwirtschaftlichen Maschine, beispielsweise einer Pflugschar, formschlüssig, beispielsweise über eine Schraubverbindung, festgelegt werden kann. Der Träger ist vergleichsweise flach und bandartig mit einem rechteckigen, trapezartigen oder nicht rotationssymmetrischen Querschnitt ausgebildet sein.

Die Steckverbindung zwischen der Scharspitze und dem Träger ist bevorzugt als eine Nut mit einer korrespondierend ausgebildeten Feder ausgebildet, wobei die Nut eine Längserstreckung in Aufsteckrichtung der Scharspitze auf den Träger aufweist. Über diese Nut-Feder-Verbindung wird die Scharspitze mit dem Träger formschlüssig verbunden. Dabei kann die Nut eine Kontur oder einen Querschnitt aufweisen, der ein Trennen der Scharspitze von dem Träger senkrecht zu der Aufsteckrichtung von dem Träger weg verhindert. Dazu kann die Nut als eine Schwalbenschanz-Führung, eine T-Führung oder eine C-Führung mit Seitenschenkeln, die an ihren Enden aufeinander zu laufen, ausgebildet sein. Die Feder weist eine korrespondierende Formgebung auf, beispielsweise kann die Feder als Endteil des Träges ausgebildet sein, das heißt, dass die Formgebung des Endteils des Trägers zu der Formgebung der Nut korrespondiert und eine formschlüssige, verdrehsichere und senkrecht zu der Aufsteckrichtung wirkende Trennung der Scharspitze von dem Träger verhindert. Die Nutseitenwände können dabei gradlinig und parallel verlaufen, so dass ein leichtes Aufstecken der Scharspitze auf den Träger erleichtert wird. Die Verriegelung entgegen der Aufsteckrichtung wird dann nicht über einen Kraftschluss durch Verkeilen, sondern über das Formschlusselement realisiert. Zusätzliche kraftschlüssige Komponenten durch eine Formgebung der Nut-Feder-Verbindung können vorgesehen und ergänzend zu dem Formschlusselement ausgebildet sein.

Bevorzugt ist die Nut in der Scharspitze ausgebildet, grundsätzlich kann die Nut auch in dem Träger ausgebildet sein. Das Formschlusselement kann entweder in der Nut oder an der Feder ausgebildet sein, die Feder kann auch durch einen Endabschnitt des Trägers oder der Scharspitze ausgebildet sein.

In einer Weiterbildung der Erfindung ist die Nut in Richtung auf das vorderen Ende sich verjüngend ausgebildet, so dass sich beim Auftreiben der Scharspitze auf den Träger oder das Leitblech die Nut, insbesondere in Gestalt einer Schwalbenschwanzführung, verspannt. Eine Weiterbildung der Erfindung sieht vor, dass eine Feder oder Spitze an dem Träger oder der Scharspitze, je nachdem, wo die Nut ausgebildet ist, ausgebildet oder angeordnet ist, die in Richtung auf das vordere Ende sich verjüngend ausgebildet ist. An der Spitze oder der Feder ist bevorzugt das Formschlusselement angeordnet oder ausgebildet. Bevorzugt weisen die Nut und die Spitze, die zur Befestigung der Scharspitze ineinander geschoben werden, den gleichen oder nahezu den gleichen Keilwinkel auf, so dass nach dem Verbinden der Scharspitze mit dem Träger eine möglichst über die gesamte Einführlänge sich erstreckende Anlage von Nut und Feder ergibt, um eine sichere Verbindung zu gewährleisten.

Alternativ ist vorgesehen, dass sich der Träger oder die Feder zur Spitze hin verjüngt und die Nut geradlinig ausgebildet ist, so dass sich der im Bereich des hinteren Endes der Nut verklemmt, z.B. an der rückwärtigen Seite der Scharspitze, so dass der Druck oben auf den Träger zunimmt. Dadurch wird ein Eindringen von Schmutz und dergleichen verhindert. Bei einer Demontage löst sich die Verbindung einfach und schnell.

Bevorzugt weist die Scharspitze an der dem Träger abgewandten Seite eine geschlossene Oberfläche auf, so dass auf der Frontseite der Scharspitze, die der Nut gegenüberliegt, eine glatte Oberfläche vorliegt, auf der die Erde oder das bearbeitete Material abgleiten kann. Es werden keine Durchgangslöcher für Befestigungselemente wie Schrauben und dergleichen benötigt, so dass sich Erde und dergleichen nicht festsetzen können. Es liegt eine verschleißfreie Verbindung zwischen dem Träger und der Scharspitze vor, da keine Verbindungselemente in dem Erdfluss bei der Bodenbearbeitung liegen. Weiterhin wird bei einer glatten Oberfläche der Scharspitze weniger Zugkraft und weniger Kraftstoff im Vergleich zu anderen Verbindungen benötigt.

Ein Endanschlag, der die Aufsteckbewegung der Scharspitze auf den Träger verhindert, kann sowohl an dem Träger als auch an der Scharspitze ausgebildet sein. An dem Träger oder der Scharspitze ist bevorzugt ein zum Formschlusselement korrespondierender Hinterschnitt ausgebildet, in den das Formschlusselement einrastet und einen Widerstand gegen eine Bewegung entgegen der Aufsteckrichtung bereitstellt.

Nachfolgend werden Ausführungsbeispiele der Erfindung anhand der beigefügten Figuren näher erläutert. Es zeigen:
- Figur 1 -: eine Pflugschar mit Leitblech und auswechselbarer Scharspitze in Draufsicht;
- Figur 2 -: eine Pflugschar gemäß Figur 1 in Seitenansicht;
- Figur 3 -: eine Detailansicht eines Leitblechs mit einer auswechselbaren Scharspitze;
- Figur 4 -: eine erste Schnittdarstellung der Steckverbindung zwischen Schar und Träger;
- Figur 5 -: eine zweite Schnittdarstellung; sowie
- Figur 6 -: eine Ausgestaltung eines Trägers als Grubber.

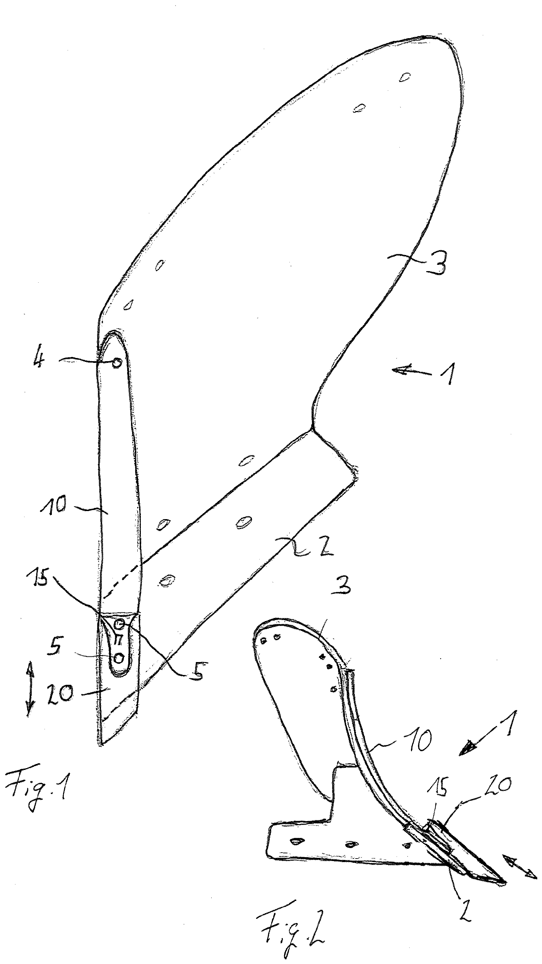

Die Figur 1 zeigt ein Bodenbearbeitungsgerät 1 in Gestalt eines Pfluges mit einer Schar 2 und einem daran befestigten Streichblech 3, das an seiner Vorderkante mit einem Träger 10 in Gestalt eines Leitbleches versehen ist. Der Träger 10 weist ein oberes Ende und ein unteres Ende auf, das obere Ende des Trägers 10 ist mit einer Schraube 4 lösbar an dem Streichblech 3 befestigt, das untere Ende ist mit zwei Schrauben 5 mit der Schar 2 verbunden. An dem unteren Ende des Trägers 10 ist eine Scharspitze 20 auf den Träger 20 aufgesteckt und dort formschlüssig über ein Formschlusselement 15 verriegelt. Zur Montage der Scharspitze 20 wird diese auf das untere Ende des Trägers 10 aufgesetzt und in Richtung auf das obere Ende, wie es durch den nach oben gerichteten Pfeil angedeutet ist, bis in eine Endposition aufgeschoben. Dies kann mit einem Hammer oder einem Stein erfolgen. Eine Montage, bei der lediglich ein Hammer oder ein gleichwirkendes Schlagelement benötigt wird, gilt als werkzeuglose Montage. Zum Lösen der Scharspitze 20 wird eine entgegen der Aufsteckrichtung gerichtete Kraft auf das hintere Ende der Scharspitze 20 aufgebracht, um diese von dem Träger 10 zu entfernen. Hierdurch ist eine werkzeuglose Demontage möglich.

In der Figur 2 ist das Bodenbearbeitungsgerät 1 in einer Seitenansicht gezeigt, das Streichblech 3 und der Träger 10 in Gestalt des Leitbleches sind an der Schar 2 befestigt. Die nach oben gerichtete Vorderkante des Streichbleches 3 ist ebenso wie der darauf aufliegende Träger 10 gewölbt, so dass die Erde nach oben angehoben und dann entlang des Streichbleches 3 zur Seite abgelenkt und umgelegt wird. An dem vorderen Ende des Träges 10 und der Schar 2 ist die Scharspitze 20 aufgesteckt und formschlüssig gesichert, die Aufsteckrichtung und die entgegengesetzte Lösrichtung ist durch den Doppelpfeil angedeutet.

Die Schar 2, das Streichblech 3 und der Träger 10 sind aus einem vergleichsweise weichen und elastischen Metall hergestellt, die Scharspitze 20 aus einem Material, das einen größeren Verschleißwiderstand aufweist, insbesondere aus einem Hartmetall oder einem anderen Hartwerkstoff. Ebenso kann die Scharspitze 20 mit einer verschleißfesten Beschichtung versehen sein.

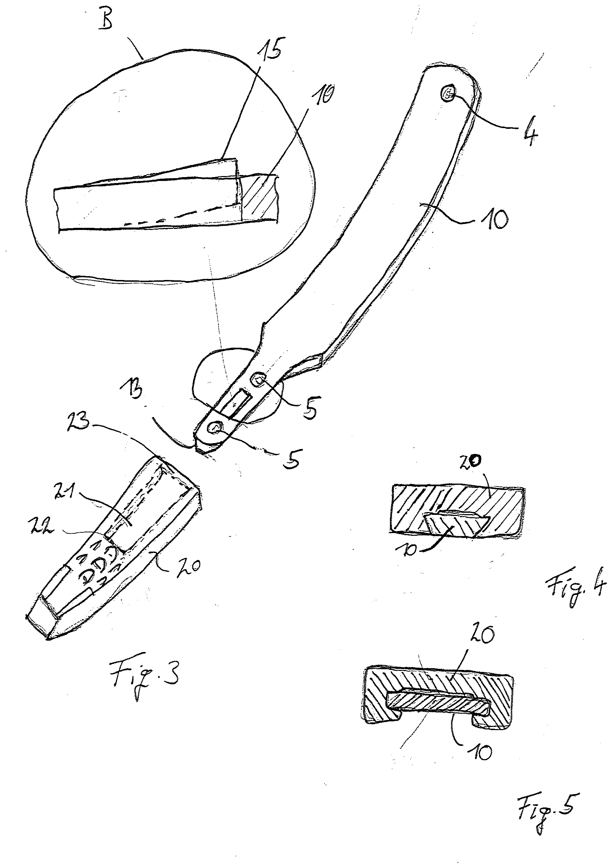

Figur 3 zeigt eine Detailansicht des Trägers 10 und der Scharspitze 20 vor der Montage aneinander. Der Träger 10 oder das Leitblech weist an dem oberen Ende eine und an dem unteren Ende zwei Befestigungsschrauben 4, 5 zur Befestigung an dem nicht dargestellten Streichblech und der Schar auf. Zwischen den beiden unteren Schrauben 5 ist ein Formschlusselement 15 in Gestalt einer im Wesentlichen rechteckigen, an drei Seiten aus dem unteren Ende des Trägers 10 herausgeschnittenen Federzunge ausgebildet. In der Scharspitze 20 ist eine korrespondierend zu dem unteren Ende des Trägers 10 ausgebildete Nut eingearbeitet, die im montierten Zustand in Richtung auf den Träger 10 eine Öffnung aufweist. Die Scharspitze 10 weist somit eine im Wesentlichen geschlossene obere, in Bearbeitungsrichtung nach vorn gerichtete Oberfläche auf, so dass das Erdreich an der Oberseite der Scharspitze 20 entlanggleiten kann. Die Nut 21 ist von der unteren Oberfläche ausgehend ausgebildet und erstreckt sich von dem hinteren Ende der Scharspitze 20 in Richtung auf das vordere Ende. Die Nut 21 kann einen zum vorderen Ende hin sich verjüngenden Querschnitt oder aber auch parallele Seitenwände aufweisen.

In Einzelheit B der Figur 3 ist der Träger 10 mit dem herausgebogenen Formschlusselement 15 gezeigt. Das Formschlusselement 15 als Federzunge ist durch einen U-förmigen Ausschnitt, beispielsweise durch ein Laserschneidverfahren, ausgebildet. Die Seitenschenkel erstrecken sich parallel zu den Seitenkanten des vorderen Endes des Trägers 10, der Verbindungsschenkel des Ausschnittes ist an dem vorderen Ende des Trägers 10 gegenüberliegenden Ende der Seitenschenkel ausgebildet. Das Formschlusselement 15 ist nach oben hin, also zur Oberseite des Trägers 10 über die übrige Oberfläche hinausstehend herausgebogen, die Federeigenschaften können durch ein Härteverfahren erzeugt werden. Alternativ ist es in einer nicht erfindungsgemäßen Ausführungsform möglich, das Formschlusselement 15 als separates Bauteil federnd zu lagern, so dass ein Widerstand gegen eine in Richtung auf den Träger 10 gerichtete Druckkraft bereitgestellt wird. Grundsätzlich ist es auch in einer nicht erfindungsgemäßen Ausführungsform möglich, das Formschlusselement an der Scharspitze auszubilden. Ebenso können die Nut in dem Träger und die Feder durch oder an der Scharspitze angeordnet oder ausgebildet sein.

Die Scharspitze 20 mit der Nut 21 weist eine geschlossene Oberseite und eine Nutorientierung in Längserstreckung der Scharspitze 20 auf. An dem der vorderen Ende der Scharspitze 20 gegenüberliegende Ende der Nut 21 ist ein Vorsprung oder Hinterschnitt 23 ausgebildet oder angeordnet, der sich im dargestellten Ausführungsbeispiel quer über die gesamte Nutbreite erstreckt und ausgebildet ist, formschlüssig mit dem Formschlusselement 15 in Eingriff zu treten. Zur Montage wird die Scharspitze 20 auf das vordere Ende oder die Spitze des Trägers 10 aufgeschoben, nachdem der Träger 10 an dem Bodenbearbeitungsgerät montiert wurde. Das vordere Ende des Trägers 10 ist im Vergleich zu dessen hinterem Ende schmaler, die Breite der Scharspitze 20 entspricht der Breite des Trägers 10 am hinteren Ende oder ist etwas breiter. Die Spitze der Träger 10 verjüngt sich in Richtung auf das vordere Ende, eine korrespondierende Verjüngung oder Keilform ist in der Nut 21 der Scharspitze 20 ausgebildet, um die Scharspitze 20 sicher an dem Träger 10 zu halten.

In der Figur 4 ist ein Querschnitt durch eine montierte Scharspitze 20 gezeigt. Die Scharspitze 20 weist eine schwalbenschwanzförmige Nut 21 auf, der Träger 10 weist einen ebenfalls schwalbenschwanzförmigen Querschnitt auf, der korrespondierend zu der Nut 21 ausgebildet ist, so dass beim Aufschieben der Scharspitze 20 auf den Träger 10 entlang der Nut 21 eine formschlüssige Verriegelung zwischen der Scharspitze 20 und dem Träger 10 erreicht wird, der eine Trennung der Scharspitze 20 von dem Träger 10 verhindert. Über die geneigten Seitenwände der Nut 21 wird ein Hinterschnitt bereitgestellt, da der Nutgrund breiter als die Nutöffnung ist. Dadurch kann die Scharspitze 20 nicht nach oben von dem Träger 10 abgehoben werden. Die Winkel der Schwalbenschwanzverbindung sind im Rahmen der technischen Grenzen frei wählbar.

Durch eine Längenbegrenzung der Nut 21 ist ein Endanschlag 22 ausgebildet, der mit dem Endanschlag 13 an dem Träger in Gestalt der vorderen Spitze zusammenwirkt. Dadurch wird bei der Bearbeitung des Bodens mit dem Bodenbearbeitungsgerät 1 verhindert, dass sich die Scharspitze 20 über ein vorbestimmtes Maß hinaus auf den Träger 10 aufschiebt. Der Endanschlag 22 ist so dimensioniert, dass das Formschlusselement 15 hinter den Hinterschnitt 23 am hinteren Ende der Scharspitze 20 hintergreifen kann und dadurch eine formschlüssige Verriegelung bereitgestellt wird. Durch die Längserstreckung parallele Ausgestaltung der Nutwände kann die Scharspitze 20 einfach und mit einem geringen Kraftaufwand auf den Träger 10 aufgeschoben und dort formschlüssig verriegelt werden. Zum Demontieren wird ein Impuls auf das hintere Ende der Scharspitze 20 ausgeübt, beispielsweise durch einen Hammer, und dadurch die Scharspitze 20 werkzeuglos von dem Träger 10 getrennt.

Eine Variante der Erfindung ist in der Figur 5 dargestellt, bei der die Scharspitze 20 eine T-förmige oder C-förmige Nutgestaltung aufweist, bei der die Endbereiche der Nutwände in Richtung aufeinander zu ausgebildet sind, so dass eine formschlüssige Verriegelung auch bei einem im Querschnitt rechteckigen Träger 10 erreicht wird. Die Oberseite des vorderen Endes des Trägers 10 liegt an dem Nutgrund an, die Seitenwände des Trägers 10 an den Nutwänden an, die Unterseite des Trägers 10 liegt an den nach innen gerichteten Schenkeln der Nut 21 an. Die Nut 21 ist nach unten offen, nach der Montage ist eine formschlüssige Verriegelung über das Formschlusselement 15 gegeben.

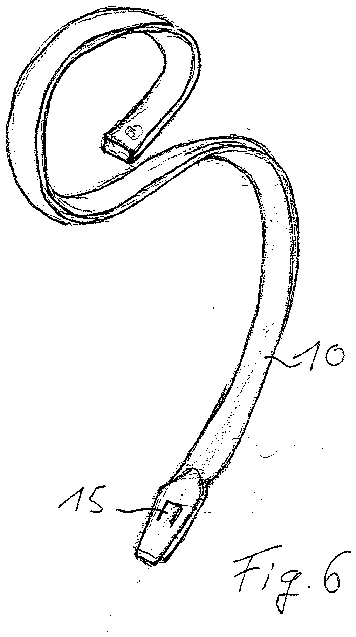

Eine Variante der Erfindung ist in der Figur 6 angedeutet, bei der das Formschlusselement aus einem Träger 10 herausgeformt ist, der als Grubberzinken ausgebildet ist. Eine Scharspitze ist nicht dargestellt. Die Seitenkanten des vorderen Endes des Trägers 10 laufen leicht konisch nach vorn aufeinander zu, so dass sich entweder eine zusätzliche Verkeilung oder aber ein Endanschlag beim Aufstecken der Scharspitze ergibt.

## Patentansprüche

1. Bodenbearbeitungsgerät für landwirtschaftliche Maschinen mit einem Träger (10), der ein oberes Ende und ein unteres Ende aufweist, an dem eine auswechselbare Scharspitze (20) aufgesteckt und über zumindest ein Formschlusselement (15) gegen eine Verlagerung entgegen einer Aufsteckrichtung gesichert ist, wobei das Formschlusselement (15) federnd in Richtung einer Sicherungsposition ausgebildet ist, **dadurch gekennzeichnet, dass** das Formschlusselement (15) als eine aus dem Träger (10) herausgebogene und aus dem Träger (10) ausgebildete Federzunge ausgebildet ist.

2. Bodenbearbeitungsgerät nach Anspruch 1, **dadurch gekennzeichnet, dass** der Träger (10) als Leitblech oder Zinken ausgebildet ist.

3. Bodenbearbeitungsgerät nach einem der voranstehenden Ansprüche, **dadurch gekennzeichnet, dass** der Träger (10) und die Scharspitze (20) über eine in Aufsteckrichtung langgestreckte Nut (21) miteinander verbunden sind.

4. Bodenbearbeitungsgerät nach Anspruch 3, **dadurch gekennzeichnet, dass** die Nut (21) einen Querschnitt aufweist, der ein Trennen der Scharspitze (20) von dem Träger (10) senkrecht zu der Aufsteckrichtung verhindert.

5. Bodenbearbeitungsgerät nach Anspruch 3 oder 4, **dadurch gekennzeichnet, dass** die Nut (21) als Schwalbenschwanz-Nut, T-Nut oder C-Nut ausgebildet und eine Feder eine korrespondierende Formgebung aufweist.

6. Bodenbearbeitungsgerät nach einem der Ansprüche 3 bis 5, **dadurch gekennzeichnet, dass** die Nut (21) und eine dazugehörige Feder einen Endanschlag (13, 22) aufweisen.

7. Bodenbearbeitungsgerät nach einem der Ansprüche 3 bis 6, **dadurch gekennzeichnet, dass** die Nut (21) an der Scharspitze (20) oder dem Träger (10) ausgebildet ist.

8. Bodenbearbeitungsgerät nach einem der Ansprüche 3 bis 7, **dadurch gekennzeichnet, dass** die Nut (21) in Richtung auf das vorderen Ende sich verjüngend ausgebildet ist.

9. Bodenbearbeitungsgerät nach Anspruch 8, **dadurch gekennzeichnet, dass** eine zu der Nut (21) korrespondierende Feder oder Spitze an dem Träger (10) oder der Scharspitze (20) angeordnet oder ausgebildet ist, die in Richtung auf das vordere Ende sich verjüngend ausgebildet ist.

10. Bodenbearbeitungsgerät nach einem der voranstehenden Ansprüche, **dadurch gekennzeichnet, dass** die Scharspitze (20) an der dem Träger (10) abgewandten Seite eine geschlossene Oberfläche aufweist.

11. Bodenbearbeitungsgerät nach einem der voranstehenden Ansprüche, **dadurch gekennzeichnet, dass** an dem Träger (10) oder der Scharspitze (20) ein zum Formschlusselement (15) korrespondierender Hinterschnitt (23) ausgebildet ist.

## Claims

1. Soil cultivating device for agricultural machines with a support (10) which has an upper end and a lower end on which an exchangeable share point (20) is fitted and is secured against displacement against a fitting direction by means of at least one positive locking element (15), wherein the positive locking element (15) is resiliently formed in the direction of a securing position, **characterized in that** the positive locking element (15) is formed as a spring tongue bent out of the support (10) and formed from the support (10).

2. Soil cultivation device according to claim 1, **characterized in that** the support (10) is designed as a guide plate or prong.

3. Soil cultivating device according to one of the above claims, **characterized in that** the support (10) and the share point (20) are connected to one another via a groove (21) which is elongated in the direction of attachment.

4. Soil cultivating device according to claim 3, **characterized in that** the groove (21) has a cross-section which prevents the share point (20) from separating from the support (10) perpendicularly to the direction of attachment.

5. Soil cultivating device according to claim 3 or 4, **characterized in that** the groove (21) is designed as a dovetail groove, T-groove or C-groove and a tongue has a corresponding shape.

6. Soil cultivating device according to any one of claims 3 to 5, **characterized in that** the groove (21) and a corresponding tongue have an end stop (13, 22).

7. Soil cultivating device according to one of the claims 3 to 6, **characterized in that** the groove (21) is formed at the share point (20) or the support (10).

8. Soil cultivating device according to one of the claims 3 to 7, **characterized in that** the groove (21) is tapered towards the front end.

9. Soil cultivating device according to claim 8, **characterized in that** a tongue or point corresponding to the groove (21) is arranged or formed on the support (10) or the share point (20), which is designed to taper towards the front end.

10. Soil cultivating device according to one of the above claims, **characterized in that** the share point (20) has a closed surface on the side facing away from the support (10).

11. Soil cultivating device according to one of the preceding claims, **characterized in that** an undercut (23) corresponding to the positive locking element (15) is formed on the support (10) or the share point (20).

## Revendications

1. Appareil pour le travail du sol destiné à des machines agricoles comprenant un support (10), qui comporte une extrémité supérieure et une extrémité inférieure, sur laquelle une pointe de soc interchangeable (20) est emboîtée et bloquée à l'encontre d'un déplacement en sens opposé à une direction d'emboîtement par au moins un élément à coopération de formes (15), dans lequel l'élément à coopération de formes (15) est réalisé avec effet élastique en direction d'une position de blocage,
**caractérisé en ce que** l'élément à coopération de formes (15) est réalisé comme une languette-ressort réalisée à partir du support (10) et cintrée vers l'extérieur hors du support (10).

2. Appareil pour le travail du sol selon la revendication 1, **caractérisé en ce que** le support (10) est réalisé sous forme de tôle de guidage ou sous forme de dent.

3. Appareil pour le travail du sol selon l'une des revendications précédentes, **caractérisé en ce que** le support (10) et la pointe de soc (20) sont reliés l'un à l'autre via une gorge (21) allongée en direction d'emboîtement.

4. Appareil pour le travail du sol selon la revendication 3, **caractérisé en ce que** la gorge (21) a une section transversale qui empêche une séparation de la pointe de soc (20) depuis le support (10) perpendiculairement à la direction d'emboîtement.

5. Appareil pour le travail du sol selon la revendication 3 ou 4, **caractérisé en ce que** la gorge (21) est réalisée comme une gorge en queue d'aronde, une gorge en T ou une gorge en C, et une barrette présente une conformation correspondante.

6. Appareil pour le travail du sol selon l'une des revendications 3 à 5, **caractérisé en ce que** la gorge (21) et une barrette associée présentent une butée terminale (13, 22).

7. Appareil pour le travail du sol selon l'une des revendications 3 à 6, **caractérisé en ce que** la gorge (21) est réalisée sur la pointe de soc (20) ou sur le support (10).

8. Appareil pour le travail du sol selon l'une des revendications 3 à 7, **caractérisé en ce que** la gorge (21) est réalisée de manière à se rétrécir en direction de l'extrémité avant.

9. Appareil pour le travail du sol selon la revendication 8, **caractérisé en ce qu'**une barrette ou une pointe correspondant à la gorge (21) est agencée ou réalisée sur le support (10) ou sur la pointe de soc (20), et est réalisée de manière à se rétrécir en direction de l'extrémité avant.

10. Appareil pour le travail du sol selon l'une des revendications précédentes, **caractérisé en ce que** la pointe de soc (20) présente une surface fermée sur le côté détourné du support (10).

11. Appareil pour le travail du sol selon l'une des revendications précédentes, **caractérisé en ce qu'**une contre-dépouille (23) correspondant à l'élément à coopération de formes (15) est réalisée sur le support (10) ou sur la pointe de soc (20).
